# EUROPEAN PATENT APPLICATION

(11) **EP 2 124 034 A1**
(43) Date of publication of application: **25.11.2009**
(21) Application number: 08275018.3
(22) Date of filing: 20.05.2008
(51) Int. Cl.: G01N 17/04

(54) **Corrosion sensors**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

A corrosion sensor for sensing the effect of pitting corrosion to a structure is disclosed. The sensor comprises a stacked arrangement of two metallic layers, and a porous dielectric layer interposed between the metallic layers. In use of the sensor, a first metallic layer of the two metallic layers is exposed to corrosive media such that, on formation of a corrosion pit in the first metallic layer, electrolyte ingress into the porous layer will change the conductivity between the two metallic layers. The metallic layers can be connected to electrical measurement apparatus in order to detect the change in the conductivity between the first and second metallic layers

## Description

This invention relates to corrosion sensors, and more particularly to corrosion sensors for sensing pitting corrosion. The invention further relates to a method of sensing pitting corrosion. Sensors and methods according to the present invention provide an indication not only of the presence of pitting corrosion, but also of the depth of the pits formed by such corrosion.

Pitting corrosion, also known simply as pitting, is a form of localised corrosion that results in the formation of holes or cavities in a metallic material. Pitting corrosion can result form the breakdown of natural protective surface films, such as an oxide layer, or from the localised breakdown of other protective layers, such as paint applied to protect the surface of the metallic material. It can have dramatic consequences since, for example, the pits can act as stress risers, leading to fatigue, and stress corrosion cracking. Moreover, in structures for fluid transport, cavities formed as a result of pitting corrosion are a primary cause of leaks. Where fluids are flammable, such leaks can result in explosions causing severe damage to the fluid transport structure. Pitting corrosion can be difficult to detect, since the pits themselves are often obscured by the presence of corrosion products either filling or covering the pit.

Prior-known corrosion sensors, such as those described in the present Applicant's prior-published International Patent Applications Publication Numbers W02004/031740 and W02004/031739, have been able to detect the presence of pitting corrosion through measurements of the resistance of a number of corrosive tracks arranged in parallel between common terminals. By measuring the resistance of a number of corrosive tracks in parallel, the effect of pitting corrosion is averaged across all the tracks in the measurement of resistance. However, whilst such sensors are able to detect the presence of pitting corrosion, and potentially provide an indication of the number of pits resulting from such corrosion, it is not currently possible for corrosion sensors to provide any indication of the severity of pitting corrosion, for example by the provision of an indication of the depth of pits resulting from pitting corrosion.

It is an aim of the present invention to provide a corrosion sensor, and method of sensing corrosion, that overcomes, or at least partly mitigates, some of the above-mentioned problems. It is a further aim of the present invention to provide a corrosion sensor that is able to provide an indication of the depth of holes, pits or cavities resulting from pitting corrosion.

In broad terms, the present invention resides in the concept of a sensor that provides a measure of the time taken for corrosion to result in a pit of a certain depth. This concept is embodied in a number of sensors that rely on a corrosive electrolyte forming an electrical connection between two metallic layers once a pit has been formed of sufficient depth to penetrate one of the layers.

In accordance with a first aspect of the present invention, there is provided a corrosion sensor for sensing the effect of pitting corrosion to a structure, the sensor comprising a stacked arrangement of first and second metallic layers and a porous dielectric layer interposed between the metallic layers; wherein a first metallic layer of the two metallic layers is exposable to corrosive media such that, on formation of a corrosion pit in the first metallic layer, electrolyte ingress into the porous layer changes the conductivity between the metallic layers; the metallic layers being connectable to electrical measurement apparatus operable to detect the change in the conductivity between the first and second metallic layers.

In contrast with prior known sensors, which provide only an average indication of the extend to which a surface may have been affected by pitting corrosion, the sensors according to embodiments of the present invention have the advantage that they are able to provide an indication of the depth of pits formed in the structure by corrosion. Alternatively, sensors according to embodiments of the present invention can be viewed as providing a measure of the time taken to form a pit of a certain depth.

Preferably, the first metallic layer is formed of a material selected to mimic the behaviour of the structure in response to corrosive media. The sensor then provides an indication of how pitting is affecting the structure. Alternatively, it may be desired to fabricate a sensor from materials that are more sensitive to pitting corrosion than the structure. A change in conductivity can then be taken as an early warning of potentially damaging corrosion.

It is anticipated that, in most embodiments of the invention, discrete sensors, ready to be attached to a structure, will be provided. However, the second metallic layer may be provided by the structure. The sensor can then be fabricated directly onto the structure.

In one preferred embodiment, the first metallic layer defines first and second regions, the first and second regions being separated from each other, and the first and second regions having different thicknesses. The sensor can then provide a continuing indication of the depth of pits in the structure: the thinner layer will corrode through first, resulting in a measurable change in conductivity, and the thicker layer will corrode through later, resulting in a further measurable change in conductivity. Further layers of different thicknesses could, of course, be added.

The invention extends to a sensing unit comprising a substrate and a plurality of corrosion sensors as described above, which corrosion sensors are formed on the substrate, the first metallic layer of a first of the plurality of corrosion sensors having a different thickness to the first metallic layer of a second of the plurality of corrosion sensors. Such a sensing unit provides an alternative manner by which the progression of the development of pits can be monitored.

In accordance with a second aspect of the present invention, there is provided a method of sensing the effect of pitting corrosion to a structure, the method comprising the steps of: providing a stacked arrangement of two metallic layers and a porous dielectric layer interposed between the metallic layers; exposing a first metallic layer of the two metallic layers to corrosive media such that, on formation of a corrosion pit in the first metallic layer, electrolyte ingress into the porous layer changes the conductivity between the metallic layers; and measuring the conductivity between the metallic layers to detect the change in the conductivity between the first and second metallic layers. The method has the advantage that an indication of the depth of pits formed by pitting corrosion is achieved. The step of measuring the conductivity is repeated intermittently such that the conductivity between the metallic layers can be monitored. Monitoring the conductivity enables an operator to be more readily aware of when potentially damaging pits begin to be formed.

Further aspects, features and advantages of the invention will become apparent from the following description of preferred embodiments of the invention given, by way of example only, with reference to the accompanying drawings, in which:
Figure 1 is a schematic cross-section of a corrosion sensor in accordance with a first embodiment of the invention;
Figure 2 is a schematic plan view of the corrosion sensor illustrated in Figure 1;
Figure 3 is a schematic cross-section of a corrosion sensor in accordance with a second embodiment of the invention; and
Figure 4 is a schematic cross-section of a corrosion sensor in accordance with a third embodiment of the invention.

Corrosion sensors according to the present invention are intended to provide an indication of the depth of pits in a metallic structure caused by pitting corrosion to that structure, which may occur when the structure is exposed to corrosive media. Herein, the term metallic is to be construed broadly, to include any conducting element, compound or alloy. However, it will be noted that, whilst pitting corrosion occurs in a number of metallic materials, it is of considerable significance in the corrosion of aluminium and its alloys, and it is presently envisaged that sensors according to the present invention will be applied primarily to structures fabricated in a large part from aluminium or aluminium alloys. It should also be noted that, whilst in the specific examples cited below, the corrosion sensors are described for use with aircraft, it is envisaged that similar corrosion sensors will be of use in sensing corrosion to other structure, including ground vehicles, marine vessels, and fluid transport structures such as pipelines.

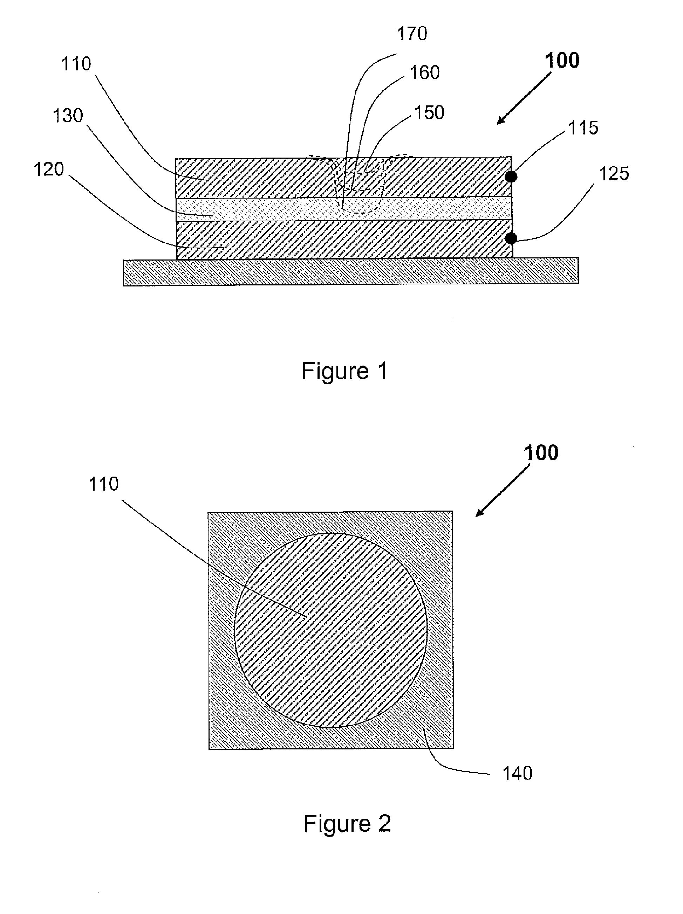

Corrosion sensor 100 comprises two metallic layers 110, 120 and dielectric layer 130 interposed between the two metallic layers 110, 120. These three layers are in a stacked arrangement, as is shown in Figure 1, and are formed on substrate 140. Only the top part of substrate 140 is shown: in fact, substrate 140 is thicker than the layers 110, 120, and 130, which layers are deposited onto substrate 140 as thin films. Substrate 140 is formed from an insulating material. Metallic layers 110 and 120 are made from a material that mimics the response of the material from which the structure is fabricated to corrosive media, and in particular the response of that material to pitting corrosion. More particularly, metallic layers 110 and 120 are fabricated from an aluminium alloy from the 2000 series, Al 2024 T4. Al 2024 is an alloy of aluminium and copper, comprising approximately 96 % aluminium and 4 % copper, with concentrations of other metallic elements being less than 1 %. Al 2024 is commonly used in the aerospace industry for the manufacture of aircraft. Corrosion sensor 100 is particularly intended for use in monitoring the effect of pitting corrosion to such an aircraft. As is indicated schematically in Figure 1, metallic layers 110 and 120 are connected to electrical measurement apparatus at terminals 115 and 125. The connection may be achieved by any convenient means, such as by soldering, or by wire bonding. Dielectric layer 130 is both insulating and porous. Dielectric layer 130 can, for example, be fabricated from porous polyimide.

Figure 2 illustrates sensor 100 in plan view. Metallic layers 110, 120 (not visible in Figure 2), and dielectric layer 130 (not visible in Figure 2) are formed on substrate 140 to have a circular shape. It has been previously found that, where the exposed parts of sensors are not rotationally symmetric, the rate of corrosion can depend on the orientation in which the sensor is mounted to a structure. The use of circular metallic and dielectric layers is expected to mitigate such orientation problems. The diameter of the layers is expected to be selected within the range between 1 mm and 10 cm; and in the present embodiment is selected to be 1 cm. The sensors must be small enough to be of manageable size, whilst being large enough that bulk properties of the metallic layers can effectively be replicated.

In the present embodiment, it is necessary to consider the metallurgy of the Al 2024 T4 alloy in determining the minimum possible size of the sensor. The Al 2024 T4 alloy comprises a first phase in which the constituent components all occupy sites on an aluminium lattice. A second phase, of crystallites of copper that have not entered into this solid solution, also forms. Such second phase particles or crystallites are distributed throughout the alloy, and can significantly affect the rate and mechanisms by which the alloy corrodes. In particular, galvanic corrosion can be activated in areas around such second phase particles. It is therefore important, in order to achieve a sensor that is representative of a bulk Al 2024 structure, that the size of the upper layer 110 is large enough that a representative number of second phase particles is present at or near the surface. Where the sensors are too small, the number of second phase particles may be too small for the sensors to provide a representative measurement of pit depth, or there may be no second phase particles at or near the surface of the upper layer 110, in which case the rate of pit formation will be significantly reduced in comparison to that affecting the bulk structure.

The thicknesses of the metallic layers are selected in dependence on convenience for manufacture of the sensor, and the particular application for which the sensor is to be used. The thickness of the upper metallic layer 110 should is selected such that the conductivity of the sensor changes at the point at which the pit depth is sufficient to warrant a manual inspection of the structure, and before the pit depth represents a particular risk to the structure. In the present embodiment, the upper layer is 250 µm thick. The thickness of the lower metallic layer 120 is selected for manufacturing convenience, since it is not exposed to corrosive media, and in the present embodiment is selected to be 1.5 µm.

In use, sensor 100 is attached to an aircraft structure such that the upper surface of metallic layer 110 is exposed to corrosive media affecting the aircraft. The conductivity between the two metallic layers 110 and 120 is measured using the electrical measurement apparatus at regular intervals, and monitored. Over time, pitting corrosion will occur at the upper surface of layer 120, and pits will develop. Pits occur where the protective layer on the surface of the alloy is broken. Such a protective layer may include paint, but, particularly in the case of an aluminium layer, may simply be a protective oxide layer. Once this surface layer is broken, electrolytes, such as sea water or salt spray, that cause corrosion gain access to a small volume of the material itself, and can become concentrated within that volume. Pits then form in the material as a result of the electrolyte localised within that volume. The pits may contain corrosion products as well as an amount of electrolyte.

The development of one particular pit is over time indicated schematically in Figure 1 by dashed lines 150, 160, and 170. No significant change in the conductivity between the layers is expected when the depth of the pit is smaller than the thickness of the upper layer 110. Thus, as the pit develops from the size indicated by dashed line 150 to that indicated by dashed line 160, no significant change in the conductivity is expected. However, a large change in the conductivity is observed when the depth of the pit exceeds the thickness of the upper layer 110. Once the upper layer is broken, the fluid electrolyte in the pit is transported through the porous dielectric 130. The fluid electrolyte has a large conductivity in comparison to the porous dielectric 130. Thus, there will be a significant change in the measured conductivity between the two layers 110 and 120, which occurs at the time a pit breaks the upper layer 110 of the sensor 100. Sensor 100 thus exhibits a large change in conductivity once corrosion formed pits are sufficiently large to break though the upper layer 110, thereby providing an indication of the time at which the corrosion-induced pits have reached a certain depth. It will be appreciated that, in order that the time between the breaking of the upper layer 110 by the pit, and the observation of an increase in conductivity between the sensor layers 110, 120, to be kept to a minimum, the thickness of the dielectric layer 130 should be kept as small as possible.

Sensor 100 can be fabricated by any known thin layer deposition methods. Metallic layers 110 and 120 can conveniently be deposited using a sputtering process, whilst the intermediate dielectric layer 130 can be formed by spinning on polyimide. Thus, in a typical fabrication process, a metallic material is sputtered onto a substrate to form layer 120, dielectric layer 130 is spun on to the surface of the metallic layer 120, and then further metallic material is sputtered onto the surface of the dielectric layer 130 to form layer 110. Electrical connections to the layers 110, 120 are formed by standard techniques known to those skilled in the art, for example by soldering, or by wire bonding, after these layers have been formed on the substrate. The resulting sensor is then packaged in a non-permeable material (not shown in Figure 1), with only the upper surface exposed, in order to prevent electrolyte at the side of the sensor forming a conductive path between the layers 110, 120 before upper layer 110 has corroded through. Either a non-permeable paint, or a sealant may be used. It will be appreciated that the non-permeable material may be chosen in dependence on the structure to which the sensor 100 is to be mounted, since it may be preferable to use a sealant or paint already in use on other parts of the structure.

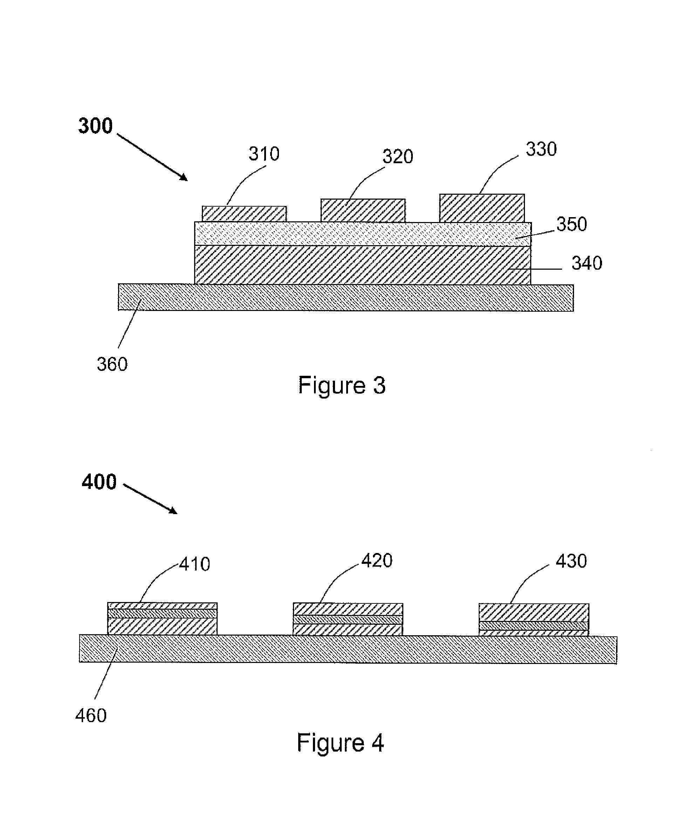

A second embodiment of the invention is arranged to provide further information concerning the development of corrosion pits in the structure. Sensor 300, illustrated in Figure 3, comprises upper metallic layers 310, 320, and 330, lower metallic layer 340, and porous dielectric layer 350 interposed between the lower metallic layer 340 and the upper metallic layers 310, 320, 330. Lower metallic layer 340 is formed on substrate 360. Upper metallic layers 310, 320, and 330 are of different thicknesses. Thus, upper metallic layer 310 has a first thickness; upper metallic layer 320 has a second thickness that is greater than the first thickness; and upper metallic layer 330 has a third thickness that is greater than the second thickness. As with sensor 100, the thicknesses of the layers 310, 320, 330 are selected in dependence on the particular application for which the application is intended. In the present embodiment, layer 310 is 5 µm thick, layer 320 is 50 µm thick, and layer 330 is 500 µm thick. Lower layer 340 is selected to be 1.5 µm thick. Sensor 300 is fabricated using similar techniques to those described in relation to sensor 100 above. It is noted that sensor 300 will also be packaged in a non-permeable material in order to reduce the possibility of electrolyte creating a short circuit between any of the upper layers 310, 320, 330, or between the upper layers 310, 320, 330 and the lower layer 340. As described in relation to sensor 100 illustrated in Figure 1, the non-permeable material can comprise either a sealant or a paint, applied to the exposed areas of layer 350, and can be selected in dependence on those sealants or paints used on other parts of the structure.

In use of sensor 300, the upper layers 320, 330 and 340 are exposed to corrosive media affecting the structure that sensor 300 is intended to monitor. Pitting corrosion will occur to each layer, and, as described above in relation to sensor 100, a significant change in conductivity will occur when pits are formed in the layers 310, 320, 330 that are sufficiently deep to penetrate the layers such that electrolyte can electrically connect between the upper and lower layers. For sensor 300, upper layer 310, being the thinnest exposed upper layer, will be penetrated first, such that a change in the conductivity between upper layer 310 and lower layer 340 will be recorded. As corrosion continues, pits in layers 320 and 330 will continue to develop. Changes in conductivity between layer 320 and lower layer 340, and between layer 330 and lower layer 340, will be observed when, firstly layer 320, and then layer 330, are penetrated by pits caused by corrosion. By appropriate selection of the thicknesses of layers 310, 320 and 330, sensor 300 can be configured to provide firstly, on penetration of thinnest layer 310, a confirmation signal that the sensor is operational; secondly, on penetration of layer 320, that has an intermediate thickness, an indication that pitting corrosion may be beginning to affect the structure, and that appropriate checks should be performed; and thirdly, on penetration of thickest layer 330, an indication that maintenance to the structure is required.

A sensing unit 400 in accordance with a third embodiment of the present invention is illustrated in Figure 4. Sensor 400 provides an alternative means of monitoring the development of pits in a structure. Sensing unit 400 comprises individual corrosions sensors 410, 420, and 430, each similar to sensor 100 illustrated in Figure 1, but each having an upper metallic layer of a different thickness. Sensing unit 400, as described above with reference to sensors 100 and 300, is also packaged in a non-permeable material that leaves the upper surfaces of sensors 410, 420, 430 exposed to the ambient environment and any corrosive media that may be present. Sensor 410 comprises the thinnest upper layer, sensor 430 comprises the thickest upper layer, and sensor 420 comprises an upper layer of thickness intermediate between these extremes. Thus, as pits develop in the upper layers, the conductivity of sensor 410 is expected to change first, the conductivity of sensor 420 is expected to change secondly, and the conductivity of sensor 430 is expected to change finally. The thicknesses of the upper layers of the sensors 410, 420, 430 can be selected in the same way as the thicknesses for layers 310, 420 and 330 described above in relation to sensor 300 illustrated in Figure 3, so that the conductivity changes can be interpreted in a similar manner.

As will be appreciated by those skilled in the art, it may be desirable to apply a number of sensors 100, 300, or sensing units 400, to a structure in a number of different locations to provide an indication of how pitting corrosion is affecting the structure as a whole. A corrosion sensing system can then be formed, itself being part of a health monitoring system for the structure. Such a system includes a data processing system arranged to receive data derived from each of a plurality of sensors or sensing units, to process the detected data and to provide corrosion analysis data based thereon. A plurality of corrosion sensors 100, 300, or sensing units 400, can be included in a semi-autonomous unit comprising a data logging memory, for storing sensor data sensed at a plurality of intervals over a period of time, and a data output whereby data is output from the unit to the data processing system. Such a semi-autonomous unit may be connected to the data processing system by means of physical wiring trough along which data is communicated, or may include a data port whereby a data connection is intermittently established. The data port may be a socket to which a data cable of a reader unit is manually connected, or a wireless data port such as a Bluetooth™ short range radio transmitter. As will be appreciated by those skilled in the art, where such a semi-autonomous unit is to be used on a structure such as an aircraft, physical wiring will be required between the individual sensors 100, 300, or sensing units 400 and the data logging memory and data output, since the individual sensors 100, 300, or sensing unit 400, will be located at a point exposed to corrosive media, possibly on the exterior of the aircraft, whilst it will be preferable for components such as the data logging memory and data output to be located in a more protected environment within the structure of the aircraft.

It is to be noted that the above-described embodiments are in all respects exemplary. Variations and modifications to the above-described embodiments are possible, and will be obvious to those skilled in the art. For example, whilst it has been described, in the above, to fabricate a sensor from upper and lower metallic layers interposed by a dielectric layer and formed on a substrate, it will be appreciated that a simpler sensor may be possible. For example, it may be possible to form the dielectric layer directly onto a metallic structure, and measuring the conductivity between the upper metallic layer and the structure. In such a case, as those skilled in the art will understand, the structure itself provides the lower metallic layer, and no substrate is necessary. Such a sensor could be fabricated using direct-write technology, and would be possible where conducting surfaces of the structure were exposed. Moreover, it will be appreciated that it may be desirable to incorporate more than three upper layers, having more than three different thicknesses, in sensor 300, in order to obtain a more graded set of data on the development of pits. Using a large number of different upper-layer thicknesses enables penetration rate to be determined. Alternatively, it may be desired to form only two separate upper layers, for reasons of simplicity. Similar considerations apply to sensor 400. Of course, it may also be possible to obtain a measurement of the penetration rate using a number of sensors 100 of the first embodiment, each having different upper layer thicknesses. However, the second and third embodiments 300, 400 are expected to provide a more convenient manner in which to make such measurements.

Moreover, it will be clearly appreciated that the sensors described above can be trivially modified in order to be applicable to structures fabricated from other aluminium alloys. The 2000 series aluminium alloys, that includes the Al 2024 T4 alloy described above, are in widespread use in aircraft, and so sensors fabricated from such alloys are expected to find application in health monitoring systems for aircraft. The 2000 series aluminium alloys comprise a major constituent of aluminium, and a minor constituent of copper.

The alloy may be an aluminium-silicon alloy having a silicon constituent proportion forming in the region of 5% to 20%, preferably approximately 12%, of the mass of the alloy, such as a 4000 series aluminium alloy.

In a further example the alloy is an aluminium-magnesium alloy having a magnesium constituent proportion forming in the region of 2% to 8%, preferably approximately 5%, of the mass of the alloy, such as a 5000 series aluminium alloy.

In another example the alloy is an aluminium-zinc alloy having a zinc constituent proportion forming in the region of 2% to 8%, preferably approximately 5%, of the mass of the alloy, such as a 7000 series aluminium alloy.

The alloy may also be an aluminium-lithium alloy having a lithium constituent proportion forming in the region of 1% to 4%, preferably approximately 2%, of the mass of the alloy, such as an 8000 series aluminium alloy.

Further examples of materials to which the present invention may be applicable will be immediately obvious to those skilled in the art. Sensors simlar to the embodiments described above can be usefully fabricated from metallic materials that exhibit pitting corrosion. Iron, for example, exhibits pitting corrosion, although sensors are less likely to find application in the case of iron structures since the rate of corrosion is high.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A corrosion sensor for sensing the effect of pitting corrosion to a structure, the sensor comprising a stacked arrangement of first and second metallic layers, and a porous dielectric layer interposed between the metallic layers; wherein a first metallic layer of the two metallic layers is exposable to corrosive media such that, on formation of a corrosion pit in the first metallic layer, electrolyte ingress into the porous layer changes the conductivity between the metallic layers.

2. A corrosion sensor as claimed in claim 1 wherein the metallic layers are connectable to electrical measurement apparatus operable to detect the change in the conductivity between the first and second metallic layers.

3. A corrosion sensor as claimed in claim 1 or claim 2, wherein the first metallic layer is formed of a material selected to mimic the behaviour of the structure in response to corrosive media.

4. A corrosion sensor as claimed in any one of the preceding claims, wherein the second metallic layer is provided by the structure.

5. A corrosion sensor as claimed in any one of the preceding claims, wherein the first metallic layer defines first and second regions, the first and second regions being separated from each other, and the first and second regions having different thicknesses.

6. A sensing unit comprising a substrate and a plurality of corrosion sensors as claimed in any one of as claimed in any one of claims 1 to 4, which corrosion sensors are formed on the substrate, the first metallic layer of a first of the plurality of corrosion sensors having a different thickness to the first metallic layer of a second of the plurality of corrosion sensors.

7. A method of sensing the effect of pitting corrosion to a structure, the method comprising the steps of:
(i) providing a stacked arrangement of two metallic layers and a porous dielectric layer interposed between the metallic layers;
(ii) exposing a first metallic layer of the two metallic layers to corrosive media such that, on formation of a corrosion pit in the first metallic layer, electrolyte ingress into the porous layer changes the conductivity between the metallic layers;
(iii) measuring the conductivity between the metallic layers to detect the change in the conductivity between the first and second metallic layers.

8. A method as claimed in claim 7, wherein the step of measuring the conductivity is repeated intermittently such that the conductivity between the metallic layers can be monitored.

9. A method as claimed in claim 7 or claim 8, wherein the first metallic layer defines first and second regions, the first and second regions being separated from each other, and first and second regions having different thicknesses, and wherein the step of measuring the conductivity between the first and second metallic layers comprises measuring the conductivity between each of the regions and the second metallic layer separately.
